# EUROPEAN PATENT SPECIFICATION

(11) **EP 3 609 626 B1**
(45) Date of publication and mention of the grant of the patent: **20.12.2023**
(21) Application number: 18714797.0
(22) Date of filing: 09.04.2018
(51) Int. Cl.: B05D 7/02, B05D 1/02, B05D 7/00

(54) **METHOD FOR PROVIDING OBJECTS WITH A PROTECTIVE COATING OF SILICONE ELASTOMER**
VERFAHREN ZUR BEREITSTELLUNG VON OBJEKTEN MIT EINER SCHUTZBESCHICHTUNG AUS SILIKONELASTOMER
PROCÉDÉ DE PRODUCTION D'OBJETS DOTÉS D'UN REVÊTEMENT PROTECTEUR EN ÉLASTOMÈRE DE SILICONE

(30) Priority: 10.04.2017 NL 2018671
(43) Date of publication of application: 19.02.2020
(73) Proprietor: Klomp Beheer B.V., 1241 CW Kortenhoef (NL)
(72) Inventor: KLOMP, Jan Eltjo, 1218 AX Hilversum (NL)
(74) Representative: Schopman, Nick Christian Timothy
(86) International application number: PCT/EP2018/059003
(87) International publication number: WO 2018/189093

(56) References cited:
- EP-A1- 2 565 005
- EP-A1- 2 881 441
- EP-A2- 1 013 347
- EP-A2- 1 333 053
- WO-A1-2009/133084
- CA-A- 1 115 143
- FR-A1- 2 843 134
- US-A- 3 888 815
- US-A- 5 190 277
- US-A- 5 326 804
- US-A- 5 338 783
- US-A1- 2006 102 661
- US-A1- 2007 199 506
- US-A1- 2012 142 798
- US-A1- 2013 122 199
- US-A1- 2013 122 206
- US-A1- 2014 272 157

## Description

The present invention relates to a method for providing objects with a protective coating of silicone elastomer. The present invention further relates to silicon coated objects obtainable by the method of present invention. The method of present invention can be used for the thin, protective and durable coating and production of environmental friendly consumer products.

Silicone elastomers, also known as silicone-rubber or Si-rubber, are an elastomer composed of silicone. Silicone elastomers are liquid/gel silicone compounds (flowable) which are transformed by a chemical reaction into a rubber-elastic state (solid state). Uncured silicone rubber generally contains, aside from the polymer, two or three additional substances; crosslinker, fillers and additives. Fillers, such as silicium dioxide (SiO2) may be used to reinforce the elastic silicone network. Also additives are not essential for silicone rubber, but additives that may be used include stabilizers, masticating aids and colorants. In order to become an elastomeric material, raw silicone rubber has to be cured. A crosslinker is required to convert the silicone into a mechanically stable cured product.

For curing catalyst can be used such as peroxides or platinum. Peroxide curing involves the use of organic peroxides. At elevated temperatures, the peroxides decompose to form highly reactive radicals which chemically crosslink the polymer chains. During platinum-catalysed curing, the Si-H groups react with the vinyl groups of the polymer to form a three-dimensional network. The platinum-based silicone cure process is also known as an addition process, because the main reaction building polymer is an addition reaction. In this reaction, an ethyl group is formed and there are no by-products. The addition reaction occurs when two separate components (A and B) are mixed to catalyse the polymers. Such silicone rubbers cure quickly, however the curing rate of or even the ability to cure is easily inhibited in the presence of tin, sulphur, or many amine compounds. The curing process can be accelerated by adding heat or pressure.

Many types of silicone elastomers are available, including high temperature vulcanisation (HTV), liquid silicone rubber (LSR) and room temperature vulcanisation (RTV) silicone elastomers. The crosslinking reaction determines the difference between the various elastomer types. HTVs are solid silicone rubber, obtained by crosslinking mostly through radicals such as organic peroxides at high temperature. HTV silicone rubber contains polymers with a high molecular weight and relatively long polymer chains. LSRs are liquid silicone elastomers, obtained by crosslinking through exposure at high temperatures. RTVs are liquid silicone elastomers, obtained by crosslinking through exposure at room temperatures. RTV and LSR silicone rubber contains polymers of lower molecular weight and shorter chains and has better flow properties.

Silicone rubbers are stable at temperatures from - 50°C to 300°C, are highly UV stable, permanently flexible, stable to abrasion, good electrical insulator, flame resistant, highly durable, moist resistant. Silicone rubber is highly inert and does not react with most chemicals. Due to these properties, silicone rubber can be found in a wide variety of products. The most well-known applications for silicone elastomers are baking moulds, elastic sealing compounds, silicone hoses, medical- and automotive products. In industry silicone rubber is applied extensively and can be processed in a variety of ways. The main processes include extrusion, co-extrusion, compression molding, transfer molding, injection molding and calendering. The processes above involve multi step processes and require high costs machinery and are not suitable for thin coating of material with silicone elastomers.

When coating an object with silicone elastomers, the process requires a multiple step process. This includes mixing the silicone with a curing agent, wherein the mixture chemically reacts to obtain the silicone elastomer. Silicone components must be mixed accurately by weight or they do not work. Also, the platinum catalyst used in addition cure silicones, such as RTVs, is susceptible to chemicals like nitrogen, sulphur, phosphorus, and contact with these chemicals will inhibit the curing process which may results in a partially cured product. Curing inhibition occurs because the substances inhibit the catalitic function of the RTV silicone elastomer.

Most RTVs are of a type of silicone rubber made from a two-component system (A and B components); crosslinker components combined with a curative/catalyst in solvent(s). RTV can be cured with a catalyst consisting of either platinum or a tin compound at room temperature. When producing silicone elastomers volatile by-products and volatile organic compounds (VOCs) may be generated during the curing process, such as acetic acid, oxime and/or alcohols, making the process less environmental friendly and dangerous to human health. VOCs are organic chemicals having a low boiling point and therefore have a high vapour pressure at ordinary room temperature, causing molecules to evaporate quickly. VOCs are numerous, and some VOCs are dangerous to human health or cause harm to the environment. Specific VOCs are regulated by law, especially when used indoors, where concentrations are the highest and health risks due to long term exposure may be increased.

Furthermore, silicones are usually very thick with a high viscosity, which makes them difficult to handle, especially when used in coating. Thin layer applications are difficult unless the viscosity is low enough to permit a proper coating. The preferred method to coat an object or material with silicones depends on the type of surface and type and the properties of silicone being used. Methods being used include dipping, spraying and painting.

To be able to spray-coat an object the viscosity of the silicone elastomer needs to be reduced and in order to achieve this solvents are used. At present, the silicone elastomers mixtures used for thin coating (e.g. by spraying) are solvent based, such as xylene or petroleum ether. However, solvents adversely affect the physical properties of the silicone coating, such as the elastic and durability properties, the hardness and strength of the coating. Consequently, the silicone coating is not very resistant to handling.

Furthermore, coating of objects that have an open cell or porous structure, such as textile or foam products with silicone elastomer is difficult to achieve a protective and durable coating in comparison of coating of an object that is comprised of a "closed structure", such as metal, plastics or even wood. When coating a foam object with silicone, the porous cellular structure of the material will incorporate the liquid silicone coating solution used to coat the object, chemically bonding with the foam material and thereby providing an irregular coated surface that is not uniform in thickness and density. Publication FR 2 843 134 discloses a method for providing an object with a coating of silicone elastomer according to the prior art.

Considering the above, there is a need in the art for a method for coating of objects, preferably spray-coating, with silicone elastomer, without the use of a solvent and without generation of decomposition products, such as VOCs during the process and to obtain a protective and durable coating that retains the advantageous physical properties of the silicone elastomer. The method of present invention can be used for the protective and durable coating and production of environmental friendly consumer products.

It is an objective of the present invention, amongst other objects, to address the above need in the art. The object of present invention, amongst other objects, is met by the present invention as outlined in the appended claims.

Specifically, the above object, amongst other objects, is met, according to a first aspect, by the present invention by a method for providing an object with a protective coating of silicone elastomer, wherein the method comprises the steps of
a) providing a liquid composition comprising room temperature vulcanisation (RTV) silicone elastomers, wherein said liquid composition comprising RTV silicone elastomer has a viscosity of between 2500 mPa·s to 10000 mPa·s,
b) spraying a first layer of said liquid composition on the surface of said object, thereby coating the surface of the object with the liquid composition, wherein the object is comprised of polymeric foam selected from the group consisting of polyurethane, polyether, silicone, natural latex, polystyrene, polyethylene, polypropylene, or mixtures thereof, preferably polyurethane, and wherein spraying is performed at an air pressure of at least 3 bar,
c) allowing polymerization of the first layer of RTV silicone elastomers, and
d) optionally, providing on said first layer at least one additional layer of said composition comprising a silicon elastomer.

To provide the liquid composition of step a), components A and B are mixed in a mixing chamber, preferably using a static mixer for the continuous mixing of the two component. One component (e.g. component A) contains a platinum complex which is mixed with the second component, preferably a hydride- and a vinyl- siloxane polymer. When components A and B are mixed, a polymerization reaction (curing) is initiated and the viscosity of the liquid composition will increase over time. When the silicon elastomer is allowed to cure, adherence of the first layer into the object (e.g. a foam object) is provided by mechanical binding of the silicon elastomer to the object. In step c) the provided first layer of silicone elastomer is allowed to polymerize. Polymerization time depends on various conditions, such as temperature (of the air and of the object) and humidity, and can be influenced by the addition of additives (such as a retarder) or the presence of impurities in the liquid composition mixture. The first layer provides the basis of further coating of the object. Further coating in step d may be performed using the composition comprising the silicone elastomer, however also different coatings can be used.

The present invention relates to the method, wherein spraying is performed at an air pressure of at least 3 bar, preferably at least 5 bar, more preferably at least 7 bar. When the liquid composition is sprayed using air pressure, i.e. mist-spraying said composition on the surface of the object to be coated, the liquid composition covers the surface of the object, but in addition and due to the air pressure that is applied, the composition partially penetrates the object. For instance, when an object to be coated is comprised of polymeric foam, the liquid composition comprising the silicon elastomer will, due to the air pressure spraying, penetrate partially into the "pores" of the foam. When the silicon elastomer is allowed to cure, adherence of the first layer into the foam is provided by mechanical binding of the silicon elastomer to the foam.

The present invention relates to the method, wherein the object is comprised of polymeric foam selected from the group consisting of polyurethane, polyether, silicone, natural latex, polystyrene, polyethylene, polypropylene, preferably polyurethane. The present invention relates to the method, wherein the object can further be comprised of textile, wood or stone. The method of present invention includes the penetration of the composition comprising silicon elastomer into the object to be coated. This penetration depends on the properties of the composition itself, i.e. the viscosity, but also on the properties of the object to be coated. Preferably the object is comprised of material that contains "pores" in which the liquid composition can flow into or forced into the object during pressure spraying of the object.

The liquid composition comprising RTV silicone elastomer in the method of present invention has a viscosity of between 2500 mPa·s to 10000 mPa·s, preferably between 3000 mPa·s to 7500 mPa·s, more preferably between 4000 mPa·s to 6000 mPa·s, most preferably between 4500 mPa·s to 5500 mPa·s. It is important that the liquid composition remains low enough in viscosity that it can still be easily applied/sprayed as a coating on the surface of the object and to obtain a thin first coated layer.

The present invention relates to the method, wherein the first layer covering the surface of the object, has a thickness of at most 1 mm, preferably at most 2 mm, more preferably at most 2.5 mm, most preferably at most 25 mm. A thin first layer is sprayed on the surface of the object to be coated, providing preferably a sealed surface of the object. The first layer adheres by mechanical binding of the silicon elastomer into the pores of the object. The first layer provides the basis of further coating of the object and may serve as a basis layer for further coating, e.g. by providing a finishing layer. The coatings may provide a textured layer resulting in a more mat finish as coating, by addition of an additive such as a thixotropic agent to the silicone elastomer composition. Also, metallic's may be added to the composition to provide a silicone elastomer composition with improved conductive properties.

According to another preferred embodiment, the present invention relates to the method, wherein polymerization is allowed for about 1 to 120 minutes, preferably 2 to 60 minutes, more preferably 5 to 15 minutes.

According to another preferred embodiment the present invention relates to the method, wherein the at least one additional layer is provided during the gel time of the RTV silicone elastomer of the first layer. The gel time (or pot life) can be determined, i.e. when it is observed that the first (preceding) layer applied on the surface of the object starts to become more viscous, stringy and gel-like, though not quite fully cured. For the method of present invention, it is not necessary to await a fully cured first layer in order to proceed with providing the coated object with an additional layer of the composition comprising a silicon elastomer. For optimal adhesion of the at least one additional layer, said additional layer is preferably provided on the first (or preceding) layer within the gel time of the composition of the first layer.

According to another preferred embodiment, the present invention relates to the method, wherein the gel time is about 1 to 30 minutes, preferably 5 to 15 minutes, more preferably 6 to 8 minutes. Depending on the further additives in the liquid composition comprising silicon elastomer, such as the addition of a retarder or thixotropic agent, the gel time may be affected.

According to a preferred embodiment, the present invention relates to the method, wherein the object has a temperature of preferably between about 15 ⁰C to 25 ⁰C, preferably about 17 ⁰C to 19 ⁰C. Preferably the method of present invention is performed at room temperature, preferably between about 15 ⁰C to 25 ⁰C.

In step b) the provided liquid composition is sprayed on the surface of the object that is coated, using a spraying device. The liquid composition is transported through the spraying device towards the spray nozzle under pressure (material pressure of between 0.5 -2.5 bar) of at least 3 to 7 bar of air pressure, depending on the desired degree of penetration of the silicone coating in the object.

According to a preferred embodiment, the present invention relates to the method, wherein said composition comprising RTV silicone elastomer is obtained by an addition reaction of hydrogen siloxane with vinyl siloxane in the presence of a catalyst, pigments and optionally a filler.

According to yet another preferred embodiment, the present invention relates to the method, wherein said catalyst is platinum.

According to a preferred embodiment, the present invention relates to the method, wherein said filler is a silicium oxide or iron oxide, preferably silicium dioxide.

According to another preferred embodiment, the present invention relates to the method, wherein the composition further comprises between 0.1% to 0.5 % w/w of a thixotropic additive based on the total weight of the composition. An example of suitable thixotropic agent that can be used in the method of present invention is polyglycol. In many cases it is desirable for the liquid composition comprising silicon elastomer to flow sufficiently to form a uniform layer (coating), then to resist further flow, thereby preventing sagging on a vertical surface. Also the viscosity of the composition comprising silicone elastomer should be such that it is able to penetrate into the object that is coated, using the method of present invention. A thixotropic agent can increase the viscosity and reduce the flowability of silicone elastomers for use in coatings, without adversely affect the physical properties of the silicone coating, when cured. Also, in case materials are used that have smaller "pores" than e.g. PU foam, such as wood, the use of less thixotropic agent may be required to reduce viscosity and to increase the penetration of the coating into the material to be coated, when spraying the first layer on the surface of the object.

The present invention relates to the method, wherein the method is free of volatile organic compounds (VOC's).

According to another preferred embodiment, the present invention relates to the method, wherein the composition does not comprise a solvent. Depending on the working conditions, a lower viscosity may be desired and usually solvents are therefore used. However most solvents adversely affect the physical properties of the silicone elastomer after curing is finished. With the addition of a solvent or diluent to the silicone elastomer mixture also the curing time is often prolonged, the hardness and tensile strength are considerably decreased, which are all characteristics that can be maintained in the method of coating of present invention.

According to a preferred embodiment, the present invention relates to the method, wherein polymerisation is allowed at a temperature of at least 30 ⁰C, preferably at least 45 ⁰C, more preferably at least 60 ⁰C. Polymerisation is preferably allowed at room temperature, however higher temperatures to speed up the process may be applied, e.g. by heating the object that is coated or by increasing the environment temperature. Curing may proceed more quickly at a temperature form about 30°C to 150 °C.

The present invention, according to a second aspect, relates to a silicon coated object obtainable by the method of present invention, wherein the object is comprised of polymeric foam selected from the group consisting of polyurethane, polyether, silicone, natural latex, polystyrene, polyethylene, polypropylene, preferably polyurethane. Using the method of present invention objects with difficult angles and double curved corners can be more easily silicon coated.

According to a preferred embodiment, the present invention relates to the silicon coated object, wherein said object is coated with at least a first layer covering the surface of the object, wherein said at least first layer has a thickness of at most 1 mm, preferably at most 2 mm, more preferably at most 2.5 mm, most preferably at most 25 mm.

The present invention relates to the silicon coated object, wherein a silicon coating penetrates into said object for at least between 0.01 mm, preferably at least 0.5 mm, more preferably at least 1 mm, most preferably at least 5 mm.

According to a preferred embodiment, the present invention relates to the silicon coated object, wherein the coating is comprised of a RTV silicone elastomer is obtained by an addition reaction of hydrogen siloxane with vinyl siloxane in the presence of a platinum catalyst and optionally a filler. The filler is preferably silicium dioxide.

The present invention will be further detailed in the following figure wherein:

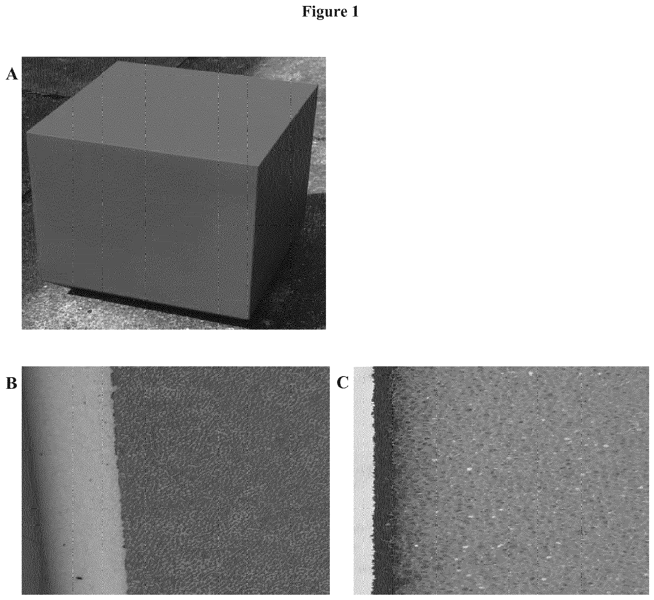

- **Figure 1:**: A) shows a foam object coated with a silicon elastomer composition according to the method of present invention;
B) shows the surface of a foam object that is coated with approximately 1 mm thick single layer of silicon elastomer according to the method of present invention;
C) shows a cross section of the silicone coated foam object of B according to the method of present invention. The penetration of the thin silicone layer into the pores of the material is clearly observed, providing a mechanical binding of the silicone elastomer to the foam object;

## Claims

1. Method for providing an object with a protective coating of silicone elastomer, wherein the method is free of volatile organic compounds (VOC's) and comprises the steps of
a) providing a liquid composition comprising room temperature vulcanisation (RTV) silicone elastomers, wherein said liquid composition comprising RTV silicone elastomer has a viscosity of between 2500 mPa·s to 10000 mPa·s, and wherein the composition further comprises between 0. 1% to 0.5% w/w of a thixotropic additive based on the total weight of the composition.
b) spraying a first layer of said liquid composition on the surface of said object, thereby coating the surface of the object with the liquid composition, wherein the object is comprised of polymeric foam selected from the group consisting of polyurethane, polyether, silicone, natural latex, polystyrene, polyethylene, polypropylene, or mixtures thereof, preferably polyurethane, and wherein spraying is performed at an air pressure of at least 3 bar, wherein the first layer covering the surface of the object, has a thickness of at most 1 mm
c) allowing polymerization of the first layer of RTV silicone elastomers, and
d) optionally, providing on said first layer at least one additional layer of said composition comprising a silicon elastomer.

2. Method according to claim 1, wherein polymerization is allowed for about 1 to 120 minutes, preferably 2 to 60 minutes, more preferably 5 to 15 minutes.

3. Method according to claim 1 or 2, wherein the at least one additional layer is provided during the gel time of the RTV silicone elastomer of the first layer, wherein the gel time is about 1 to 30 minutes, preferably 5 to 15 minutes, more preferably 6 to 8 minutes.

4. Method according to any of the claims 1 to 3, wherein the object has a temperature of preferably between about 15 °C to 25 °C, preferably about 17 °C to 19 °C.

5. Method according to any of the claims 1 to 4, wherein said composition comprising RTV silicone elastomer is obtained by an addition reaction of hydrogen siloxane with vinyl siloxane in the presence of a catalyst and optionally a filler.

6. Method according to claim 5, wherein said catalyst is platinum.

7. Method according to claim 6, wherein said filler is a silicium oxide or iron oxide, preferably silicium dioxide.

8. Method according to any of the claims 1 to 7, wherein the composition does not comprise a solvent.

9. Method according to any one of the claims 1 to 8, wherein polymerisation is allowed at a temperature of at least 30 °C, preferably at least 45 °C, more preferably at least 60 °C.

10. Silicon coated object obtainable by the method according to any one of the claims 1 to 9, wherein the object is comprised of polymeric foam selected from the group consisting of polyurethane, polyether, silicone, natural latex, polystyrene, polyethylene, polypropylene, preferably polyurethane, and wherein the coating is comprised of a RTV silicone elastomer is obtained by an addition reaction of hydrogen siloxane with vinyl siloxane in the presence of a catalyst and optionally a filler.

11. Silicon coated object according to claim 10, wherein said object is coated with at least a first layer covering the surface of the object, wherein said at least first layer has a thickness of at most 1 mm..

## Patentansprüche

1. Verfahren zum Versehen eines Gegenstandes mit einer Schutzbeschichtung aus Silikon-Elastomer, wobei in dem Verfahren keine flüchtigen organischen Verbindungen (VOC) verwendet werden, und wobei das Verfahren die folgenden Schritte aufweist:
a) Bereitstellen einer flüssigen, bei Raumtemperatur vulkanisierbaren Silikon-Elastomere (RTV-Silikon-Elastomere) aufweisenden Zusammensetzung, wobei die flüssige, die RTV-Silikon-Elastomere aufweisende Zusammensetzung eine Viskosität zwischen 2500 mPa·s und 10000 mPa·s aufweist, und wobei die Zusammensetzung ferner, bezogen auf das Gesamtgewicht der Zusammensetzung, zwischen 0,1 % und 0,5 % Gew. % eines thixotropen Additivs aufweist;
b) Aufsprühen einer ersten Schicht der flüssigen Zusammensetzung auf die Oberfläche des Gegenstandes, wodurch die Oberfläche des Gegenstandes mit der flüssigen Zusammensetzung beschichtet wird, wobei der Gegenstand aus einem Polymerschaum besteht, ausgewählt aus der Gruppe bestehend aus Polyurethan, Polyether, Silikon, Naturlatex, Polystyrol, Polyethylen, Polypropylen oder Mischungen davon, vorzugsweise Polyurethan, und wobei das Aufsprühen unter Druckluft von mindestens 3 bar erfolgt, wobei die erste, die Oberfläche des Gegenstandes bedeckende Schicht eine Dicke von höchstens 1 mm aufweist;
c) Ermöglichen der Polymerisation der ersten Schicht aus RTV-Silikon-Elastomeren, und
d) gegebenenfalls Aufbringen zumindest einer zusätzlichen, ein Silikon-Elastomer aufweisenden Schicht der Zusammensetzung auf die erste Schicht.

2. Verfahren nach Anspruch 1, bei dem die Polymerisation in etwa 1 bis 120 Minuten, vorzugsweise 2 bis 60 Minuten, besonders bevorzugt 5 bis 15 Minuten, erfolgen soll.

3. Verfahren nach Anspruch 1 oder 2, wobei die zumindest eine zusätzliche Schicht während der Gelierzeit der ersten Schicht aus RTV-Silikon-Elastomer aufgebracht wird, wobei die Gelierzeit etwa 1 bis 30 Minuten, vorzugsweise 5 bis 15 Minuten, besonders bevorzugt 6 bis 8 Minuten beträgt.

4. Verfahren nach einem der Ansprüche 1 bis 3, wobei der Gegenstand eine Temperatur von vorzugsweise etwa 15°C bis 25°C, vorzugsweise etwa 17°C bis 19°C aufweist.

5. Verfahren nach einem der Ansprüche 1 bis 4, wobei die das RTV-Silikon-Elastomer aufweisende Zusammensetzung durch eine Additionsreaktion von Hydrogensiloxan mit Vinylsiloxan in Gegenwart eines Katalysators und gegebenenfalls eines Füllstoffs erhalten wird.

6. Verfahren nach Anspruch 5, wobei der Katalysator aus Platin besteht.

7. Verfahren nach Anspruch 6, wobei der Füllstoff ein Siliziumoxid oder Eisenoxid, vorzugsweise Siliziumdioxid, ist.

8. Verfahren nach einem der Ansprüche 1 bis 7, wobei die Zusammensetzung kein Lösungsmittel enthält.

9. Verfahren nach einem der Ansprüche 1 bis 8, wobei die Polymerisation bei einer Temperatur von mindestens 30°C, vorzugsweise mindestens 45°C, noch bevorzugter mindestens 60°C, erfolgen soll.

10. Silikonbeschichteter, durch das Verfahren nach einem der Ansprüche 1 bis 9 erhaltener Gegenstand, wobei der Gegenstand aus einem Polymerschaum besteht, ausgewählt aus der Gruppe bestehend aus Polyurethan, Polyether, Silikon, Naturlatex, Polystyrol, Polyethylen, Polypropylen, vorzugsweise Polyurethan, und wobei die Beschichtung aus einem RTV-Silikon-Elastomer besteht, welches durch eine Additionsreaktion von Hydrogensiloxan mit Vinylsiloxan in Gegenwart eines Katalysators und gegebenenfalls eines Füllstoffs erhalten wird.

11. Silikonbeschichteter Gegenstand nach Anspruch 10, wobei der Gegenstand mit zumindest einer, die Oberfläche des Gegenstands bedeckenden ersten Schicht beschichtet ist, wobei die zumindest eine erste Schicht eine Dicke von höchstens 1 mm aufweist.

## Revendications

1. Procédé de formation d'un revêtement protecteur à base d'élastomère de silicone sur un objet, dans lequel le procédé n'utilise pas de composés organiques volatils (VOC) et comprend les étapes de :
a) fourniture d'une composition liquide comprenant des élastomères de silicone vulcanisant à température ambiante (RTV), dans lequel ladite composition liquide comprenant l'élastomère de silicone RTV présente une viscosité comprise entre 2500 mPa.s et 10000 mPa.s, et dans lequel la composition comprend, en outre, entre 0,1 % et 0,5 % en poids d'un additif thixotropique sur la base du poids total de la composition.
b) pulvérisation d'une première couche de ladite composition liquide sur la surface dudit objet, recouvrant ainsi la surface de l'objet avec la composition liquide, dans lequel l'objet est composé d'une mousse polymère sélectionnée dans le groupe constitué par le polyuréthane, le polyéther, le silicone, le latex naturel, le polystyrène, le polyéthylène, le polypropylène ou des mélanges de ces derniers, de préférence, le polyuréthane, et dans lequel la pulvérisation est exécutée sous une pression d'air supérieure ou égale à 3 bars, dans lequel la première couche recouvrant la surface de l'objet présente une épaisseur au plus égale à 1 mm,
c) polymérisation de la première couche d'élastomères de silicone RTV, et
d) en variante, formation, sur ladite première couche, d'au moins une couche additionnelle de ladite composition comprenant un élastomère de silicium.

2. Procédé selon la revendication 1, dans lequel la polymérisation est réalisée pendant 1 à 120 minutes environ, de préférence, pendant 2 à 60 minutes, plus préférablement, pendant 5 à 15 minutes.

3. Procédé selon la revendication 1 ou 2, dans lequel la au moins une couche additionnelle est formée pendant la durée de gel de l'élastomère de silicone RTV de la première couche, dans lequel la durée de gel est comprise entre 1 et 30 minutes environ, de préférence, entre 5 et 15 minutes, plus préférablement, entre 6 et 8 minutes.

4. Procédé selon l'une quelconque des revendications 1 à 3, dans lequel l'objet présente une température comprise, de préférence, entre 15°C et 25°C environ, de préférence, entre 17°C et 19°C environ.

5. Procédé selon l'une quelconque des revendications 1 à 4, dans lequel ladite composition comprenant un élastomère de silicone RTV est obtenue par une réaction d'addition de siloxane d'hydrogène et de siloxane de vinyle en la présence d'un catalyseur et, en variante, d'une charge.

6. Procédé selon la revendication 5, dans lequel ledit catalyseur est à base de platine.

7. Procédé selon la revendication 6, dans lequel ladite charge est un oxyde de silicium ou un oxyde de fer, de préférence, du dioxyde de silicium.

8. Procédé selon l'une quelconque des revendications 1 à 7, dans lequel la composition ne comprend pas de solvant.

9. Procédé selon l'une quelconque des revendications 1 à 8, dans lequel la polymérisation est assurée à une température supérieure ou égale à 30°C, de préférence, supérieure ou égale à 45°C, plus préférablement, supérieure ou égale à 60°C.

10. Objet revêtu de silicium pouvant être obtenu par le procédé selon l'une quelconque des revendications 1 à 9, dans lequel l'objet est composé d'une mousse polymère sélectionnée dans le groupe constitué par le polyuréthane, le polyéther, le silicone, le latex naturel, le polystyrène, le polyéthylène, le polypropylène, de préférence, le polyuréthane, et dans lequel le revêtement est composé d'un élastomère de silicone RTV, est obtenu par une réaction d'addition de siloxane d'hydrogène et de siloxane de vinyle en la présence d'un catalyseur et, en variante, d'une charge.

11. Objet revêtu de silicone selon la revendication 10, dans lequel ledit objet est revêtu avec au moins une première couche recouvrant la surface de l'objet, dans lequel ladite au moins une première couche présente une épaisseur au plus égale à 1 mm.
